# EUROPÄISCHE PATENTSCHRIFT

(11) **EP 0 912 216 B1**
(45) Veröffentlichungstag und Bekanntmachung des Hinweises auf die Patenterteilung: **23.05.2001**
(21) Anmeldenummer: 97929080.6
(22) Anmeldetag: 16.07.1997
(51) Int. Cl.: B01D 11/02, B01D 9/00

(54) **SALZREINIGUNGSANLAGE**
SALT PURIFICATION FACILITY
INSTALLATION DE PURIFICATION DE SEL

(30) Priorität: 17.07.1996 CH 178496
(43) Veröffentlichungstag der Anmeldung: 06.05.1999
(73) Patentinhaber: Va Tech Wabag AG, 8401 Winterthur (CH)
(72) Erfinder: WIRTH, Karl-Ernst, D-91230 Happurg (DE); SEDIVY, Vladimir, Michael, CH-8053 Zürich (CH); CHROMEC, Peter, CH-8472 Seuzach (CH); RYTZ, Daniel, CH-8708 Männedorf (CH)
(74) Vertreter: Patentanwaltsbüro Feldmann AG
(86) Internationale Anmeldenummer: CH9700275
(87) Internationale Veröffentlichungsnummer: WO9803241

(56) Entgegenhaltungen:
- DE-A- 1 519 755
- DE-A- 1 963 599
- DE-B- 1 044 767
- FR-A- 855 312
- GB-A- 261 085
- US-A- 3 892 539

## Beschreibung

Die vorliegende Erfindung betrifft eine Vorrichtung zur Reinigung von aus Partikeln bestehenden Feststoffen, insbesondere von kristallinen Feststoffen, gemäss Oberbegriff des Patentanspruches 1.

Salze, zum Beispiel Natriumchlorid, werden in Salzreinigungsanlagen von Fremdstoffen befreit, bevor sie in der Industrie weiterverarbeitet oder verbraucht werden. Die Art der Verunreinigungen hängt stark vom Herstellungsprozess und vom Gewinnungsort des Salzes ab. Bekannte Reinigungsverfahren verwenden entweder Vakuumrekristallisation oder mechanisches Waschen mit einer Waschflüssigkeit, beispielsweise mit Wasser. Das erste Verfahren ist teuer und wird nur für Spezialanwendungen eingesetzt. Das zweite Verfahren weist einen relativ geringen Wirkungsgrad auf, da die Waschflüssigkeit in der Reinigungsanlage mehrfach zirkuliert und dadurch immer mehr bereits ausgewaschene Verunreinigungen beinhaltet.

Abhilfe wird dadurch geschaffen, dass diese Fremdstoffe gezielt verdünnt oder mit Hilfe von chemischen Zusätzen aus der Salzlauge ausgefällt werden. Das Verdünnen und die Verwendung von chemischen Zusätzen erhöhen jedoch die Herstellungskosten des Salzes wesentlich. Ein weiterer Grund für den kleinen Wirkungsgrad sind die Salzverluste, welche dadurch verursacht sind, dass sich ein Teil der Salzkristalle in der Waschflüssigkeit auflöst.

Für die Salzreinigung bewährt haben sich ein Verfahren und eine Vorrichtung der Anmelderin, welche unter dem Namen SALEX® bekannt sind. Vorteile dieses Verfahrens sind die tiefen Betriebskosten, der verbesserte Wirkungsgrad in Hinblick auf den erzielbaren Reinheitsgrad des Salzes und die sehr niedrigen Salzverluste.

Das SALEX®-Verfahren beruht auf dem Prinzip der Gegenstromreinigung, einer Hydro-Extraktion mit einer gesättigten Lösung, bei der Fremdstoffe entfernt und zerteilte und gelöste Salzkristalle durch Verdrängungskristallisation zurückgewonnen werden. In einer einfachsten Variante des Verfahrens wird das zu reinigende Salz in einen kegelförmigen, sich nach unten verjüngenden Behälter, Hydro-Extraktor genannt, gefüllt. Schwerkraftbedingt durchrieselt das Salz den Behälter von oben nach unten. In Gegenrichtung wird mindestens annähernd reine, gesättigte Salzsole in den Hydro-Extraktor eingeführt, welche entlang der hinunterrieselnden Salzkristalle nach oben fliesst, Verunreinigungen von den Salzkristallen löst und mit nach oben führt. Das gereinigte Salz wird vom Hydro-Extraktor in eine Zentrifuge geleitet, wo die Salzkristalle von der teilweise nach unten mitgeförderten Salzsole getrennt werden.

Bevorzugterweise wird vor der Hydro-Extraktion eine Schlämmung in einem dem Hydro-Extraktor vorangestellten Schlämmbehälter durchgeführt. Dieser Schlämmbehälter weist ebenfalls eine kegelförmige, sich nach unten verjüngende Form auf, so dass das Salz den Behälter von oben nach unten durchrieselt. Ebenfalls in Gegenrichtung wird eine unreine, gesättigte Sole in den Schlämmbehälter eingeführt, welche unlösliche Verunreinigungen von den Salzkristallen abtrennt und mit nach oben führt.

Zwischen Schlämmung und Hydro-Extraktion wird bevorzugterweise eine Hydro-Klassifikation durchlaufen. Die Hydro-Klassifikation, das heisst Klassifizierung mit unreiner Sole, ermöglicht die Entfernung von weniger löslichen Fremdstoffen, zum Beispiel von Kalzium-Sulphat. Diese Hydro-Klassifikation findet im allgemeinen im oberen Bereich des Hydro-Extraktors statt, so dass sich im Hydro-Extraktor grundsätzlich zwei Reinigungsbereiche, ein oberer Hydroklassifikationsraum und ein unterer Kristallisationsraum, genauer ein Hydroextraktions- und Verdrängungskristallisationsraum, bilden.

In einer weiteren Variante des Verfahrens werden die Salzkristalle vor der Schlämmung vorgängig durch Scher- und/oder Hydro-Zerkleinerung zerkleinert. Die Hydro-Zerkleinerung sowie die Scher-Zerkleinerung brechen Salzkristalle mit eingeschlossenen Fremdpartikeln an den Bindungsstellen mit den Fremdstoffen auf und setzen diese Fremdpartikel frei.

Das Salex® -Verfahren in seinen verschiedenen Varianten ist nicht nur für Salze sondern allgemein für aus Partikeln bestehende Feststoffe, insbesondere für kristalline Feststoffe, anwendbar.

Obwohl dieses Verfahren und der hierfür verwendete Hydro-Extraktor gute Resultate erzielen, muss die Anlage doch immer wieder stillgelegt werden, da der Hydro-Extraktor verstopft. Ursache hierfür ist, dass das Salz im Hydro-Extraktor zu grösseren Klumpen kristallisiert. In der Folge werden im Hydro-Extraktor Kanäle gebildet, welche einen grösseren Durchfluss aufweisen als die übrigen Bereiche im Behälter. Dadurch wird der Flüssiganteil des in die Zentrifuge gelangenden und aus der Zentrifuge ausströmenden Salzes zu hoch.

Ferner sind weitere Verfahren und Vorrichtungen bekannt, welche ebenfalls auf einem Gegenstromprinzip beruhen.

So beschreibt DE-A-1'294'344 eine Vorrichtung zum kontinuierlichen Auswaschen der Mutterlauge aus Feststoffen, bei der die Waschflüssigkeit von unten nach oben geleitet wird, während der zu reinigende Feststoff von oben zugegeben wird und infolge der Schwerkraft durch die Waschflüssigkeit nach unten sinkt und über eine Ausflussöffnung abgeleitet wird. Es ist notwendig, dass die Waschflüssigkeit den Feststoff möglichst gleichmässig durchsetzt, wobei der Feststoff langsam absinken soll. Um dies zu erreichen, wird ein senkrecht stehendes, zylindrisches Reinigungsgefäss verwendet, welches im unteren Teil ein Einbauelement in Form einer Absetzfläche für Feststoffe aufweist. Der Auslassbereich des Gefässes unterhalb der Absetzfläche ist kegelförmig gestaltet. Die Zuleitung der Waschflüssigkeit mündet im geringen Abstand über oder unter dieser Absetzfläche in das Reinigungsgefäss. Bei diesem Verfahren steigt lediglich ein kleiner Teil der Waschflüssigkeit nach oben und verdrängt die Mutterlauge. Der grössere Teil schwemmt die abgelagerte Schicht der Feststoffpartikel zur Ausflussöffnung. Dieses Verfahren weist einen geringen Wirkungsgrad auf, da sich die Feststoffpartikel auf dem Einbauelement ablagern und zu grösseren Klumpen kristallisieren.

EP-A-0'098'637 offenbart ebenfalls eine Vorrichtung zur Reinigung von Feststoffen in einem Gegenstrom. Das Reinigungsgefäss besteht aus einem Zylinder, der mittels Zwischenplatten in mehrere vertikal übereinander angeordnete Mischkammern unterteilt ist. Diese Mischkammern sind über steuerbare Ventile miteinander verbindbar, so dass jeder Abschnitt der Feststoffsäule gezielt mit der aufsteigenden Waschflüssigkeit durchmischt werden kann. Diese Vorrichtung ist relativ aufwendig und weist einen geringen Wirkungsgrad auf, da eine Rückvermischung der zu reinigenden Feststoffe mit der Waschflüssigkeit aufgrund der erzeugten Verwirbelung stattfindet.

US-A-5'068'092 beschreibt ein Verfahren und eine Vorrichtung zur Reinigung von Natriumchlorid mittels Salzsolen und Magnesiumchloridsolen im Gegenstrom. Das Reinigungsgefäss ist zylinderförmig gestaltet, wobei es zwei Bereiche mit verschiedenen Durchmessern aufweist. Dabei ist der obere Bereich mit einem grösseren Durchmesser versehen als der untere. Der Uebergangsbereich zwischen den Bereichen und der Auslassbereich ist kegelförmig gestaltet. Beide Bereiche weisen Einlassöffnungen für die Gegenstrom-Solen auf, wobei im oberen Bereich Magnesiumchloridsolen mit einem höheren Magnesiumchloridgehalt eingelassen werden als im unteren. Auch bei dieser Anlage besteht die Gefahr, dass der Durchfluss in beiden Richtungen nicht gleichmässig bleibt.

DE-A-1'963'599 offenbart hingegen ein Verfahren und eine Vorrichtung zur Lösung und Abtrennung von Einzelkomponenten aus Feststoffgemischen, insbesondere eine Vorrichtung zur Anreicherung von Magnesiumsulfat in Sulfitablauge durch Herauslösen von Magnesiumsulfat aus Kieserit. Das in einen kegelförmigen Reinigungsbehälter eingespiesene Kieserit wird durch eine entgegen der Schwerkraft strömenden Lösungsflüssigkeit im Schwebebett gehalten. Dabei fallen die grösseren Anteile des Kieserit nach unten und können abgezogen werden. Um das Schwebebett zu erzielen, wird die Geschwindigkeit der zulaufenden Lösungsflüssigkeit in Abhängigkeit vom Oeffnungswinkel des Behälters und der Dichte und Grösse der Feststoffpartikel eingeregelt. Der Oeffnungswinkel des kegelförmigen Behälters ist kleiner als 60°, in einem bevorzugten Ausführungsbeispiel beträgt er 50°.

US-A-3'892'539 beschreibt eine Kristallisationsvorrichtung, in welcher übergrosse Kristalle aus einem Schwebebett in einen unteren Bereich absinken, dort mittels Ultraschall zerkleinert und von der Sole wieder nach oben zum Schwebebett transportiert werden, wo sie als Zuchtkeime für die weitere Kristallisation dienen. Dieser untere Bereich ist kegelförmig gestaltet und weist einen Oeffnungswinkel von 2° bis 54° auf.

GB-A-261'085 offenbart eine Kristallisationsvorrichtung, in welcher eine Nährlösung in einem steten Fluss nach oben durch die Vorrichtung geleitet wird. Die in einem Schwebebett erzeugten Kristalle werden nach unten abgezogen. In einer Ausführungsform ist die Vorrichtung kegelförmig gestaltet, um einen möglichst effizienten Ausfluss der erzeugten Kristalle zu gewährleisten. Dabei weist der Kegel einen maximalen Oeffnungswinkel von 60° auf.

Im Gegensatz zu den drei letztgenannten Vorrichtungen soll bei der Reinigung von kristallinen Feststoffen, insbesondere bei der Salzreinigung, ein gleichmässiger und über die gesamte Fläche verteilter Fluss der Feststoffe nach unten und der Salzsole nach oben erzielt werden, damit es zu keiner Rückvermischung der Feststoffe und der Salzsole kommt und eine Hydro-Extraktion und Verdrängungskristallisation stattfindet.

Es ist deshalb Aufgabe der Erfindung, eine Vorrichtung zur Reinigung von aus Partikeln bestehenden Feststoffen zu schaffen, welche die obengenannten Nachteile behebt.

Diese Aufgabe löst eine Vorrichtung zur Reinigung von aus Partikeln bestehenden Feststoffen, insbesondere von kristallinen Feststoffen, mit den Merkmalen des Patentanspruches 1.

Die erfindungsgemässe Vorrichtung lässt sich nicht nur zur Reinigung von Natriumchlorid, sondern zur Reinigung aller aus Partikeln bestehenden Feststoffe, insbesondere kristalliner Feststoffe, einsetzen, welche nach dem gleichen Prinzip von Verschmutzungen getrennt werden können.

Mit der erfindungsgemässen Vorrichtung werden durch einfache bauliche Massnahmen Klumpen- und/oder Kanalbildungen innerhalb des Reinigungsgefässes verhindert. Innerhalb des durch den zu reinigenden Feststoff gebildeten Feststoffbettes treten somit keine Strömungskanäle mit höherer Geschwindigkeit im Vergleich zu den übrigen Bereichen des Reinigungsgefässes auf. Die zu reinigenden Feststoffe strömen aufgrund der Schwerkraft und bedingt durch die Form des Reinigungsgefässes gleichmässig, das heisst mit annähernd gleicher Geschwindigkeit über den gesamten Querschnitt des Gefässes, und vergleichsweise langsam nach unten in Richtung Auslassöffnung, wobei sie in allen Bereichen von der Reinigungssole umspült werden. Die Reinigungssole strömt dabei mindestens annähernd gleichmässig nach oben. Durch die spezielle Form des Reinigungsbehälters können Feststoffe, welche sich erst im Hydroklassifikationsraum befinden, nicht über einen Kanal direkt zur Auslassöffnung gelangen, ohne durch eine gewisse Verweilzeit im Kristallisationsraum gereinigt zu werden. Zudem werden die zu reinigenden Feststoffe im Kristallisationsraum mindestens annähernd verwirbelungsfrei von der Reinigungssole umspült.

Der Wirkungsgrad, insbesondere der Reinigungsgrad, ist verbessert und die Zahl der ununterbrochenen Betriebsstunden der Anlage ist erhöht, da die Gefahr einer Verstopfung des Reinigungsgefässes vermindert ist.

Für die Funktionsfähigkeit der Reinigungsanlage ist es wesentlich, dass im Reinigungsbehälter keine Kanalbildung stattfinden kann. Vor allem darf die verunreinigte Reinigungssole nicht von oben über einen Kanal nach unten zur Auslassöffnung gelangen, da die reine Sole im unteren Bereich des Reinigungsbehälters dadurch verunreinigt würde.

Erfindungswesentlich ist die Erkenntnis, dass dies durch geeignete Wahl der Form des Reinigungsgefässes 1 gewährleistet werden kann, ohne dass irgendwelche spezielle mechanische Strömungsregler innerhalb des Reinigungsgefässes eingebaut werden müssen. Die spezielle Form des Reinigungsgefässes, das heisst der kleine Konusöffnungswinkel von 10° bis 30°, ermöglicht einen gleichmässigen, konstanten Durchfluss in beiden Strömungsrichtungen und verhindert die Klumpen- und Kanalbildung. Der maximal erzielbare Konusöffnungswinkel hängt von der Beschaffenheit der Innenwände des Reinigungsgefässes, der Fluidisationsgeschwindigkeit, der Korngrösse und der Kohäsion der zu reinigenden Feststoffe ab. Ferner ist es für die Hydro-Extraktion vorteilhaft, die Salzsole an derjenigen Stelle in den Reinigungsbehälter einzuführen, wo die relative Geschwindigkeit des Feststoffes, definiert durch die Vektorsumme der Feststoffgeschwindigkeit und der Salzsolegeschwindigkeit, kleiner ist als die Fluidisationsgeschwindigkeit. Dadurch wird eine Fluidisierung und somit eine Kanalbildung verhindert.

Vorteilhaft bei der erfindungsgemässen Vorrichtung ist zudem, dass mechanische Strömungsregler innerhalb des Reinigungsgefässes nicht mehr zwingend notwendig sind. Derartige Strömungsregler sind nur teilweise wirksam, führen zu Verwirbelungen und ungleichmässigem Fluss des Feststoffes und der Sole, sind meist störungsanfällig und in einer erstellten Reinigungsanlage schwierig zu ersetzen. Eine bevorzugte Ausführungsform der erfindungsgemässen Vorrichtung weist deshalb keine eingebauten Schikanen oder Strömungsregler auf.

Zwar weisen die Reinigungsgefässe gemäss dem Stand der Technik ebenfalls kegelförmige Bereiche auf, diese dienen im allgemeinen jedoch dazu, einen möglichst kurzen Uebergang von einem an sich kreiszylinderförmigen Gefäss zur verengten Auslassöffnung zu schaffen. Reinigungsgefässe, welche hingegen eine im wesentlichen kegelförmige Form aufweisen, sollen auf einer möglichst geringen Bauhöhe ein möglichst grosses Gefässvolumen schaffen. Der Oeffnungswinkel des Kegels wurde deshalb entsprechend diesen Kriterien optimiert, und beträgt bei beiden Ausführungsformen 50° bis 60°.

In den beiliegenden Zeichnungen sind Ausführungsbeispiele des Erfindungsgegenstandes dargestellt, welche in der nachfolgenden Beschreibung erläutert werden. Es zeigen
- Figur 1: eine schematische Darstellung der Reinigungsanlage mit dem erfindungsgemässen Reinigungsgefäss;
- Figur 2: eine weitere Ausführungsform eines Reinigungsgefässes gemäss der Erfindung;
- Figur 3: eine schematische Darstellung des SALEX®-Verfahrens der Anmelderin und
- Figur 4: eine dritte Ausführungsform eines Reinigungsgefässes gemäss der Erfindung.

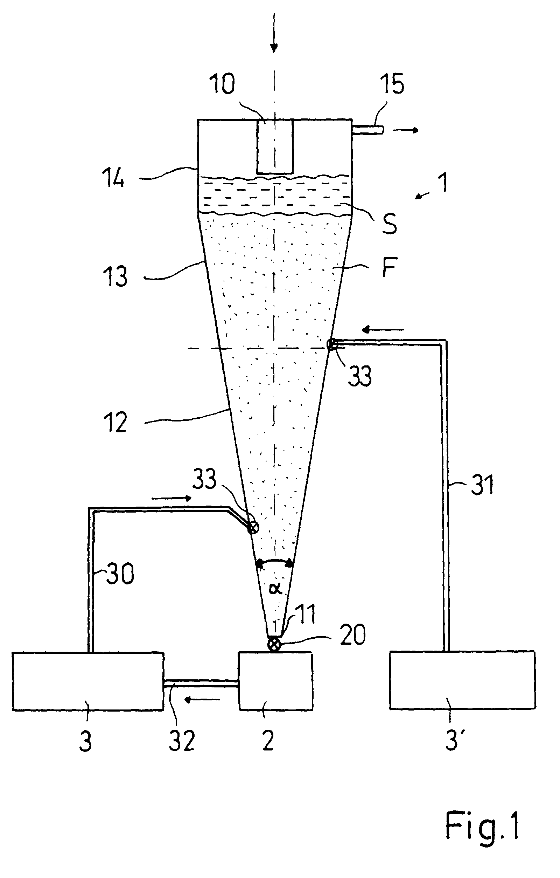

In Figur 1 ist eine Vorrichtung zur Reinigung von kristallinen Feststoffen, hier eine Salzreinigungsanlage, dargestellt, welche bevorzugterweise gemäss dem SALEX® -Verfahren betrieben wird. Ein Reinigungsgefäss 1, auch Hydro-Extraktor genannt, ist vertikal stehend angeordnet und weist oben eine Einfüllöffnung 10 sowie einen Soleüberlauf 15 und unten eine Auslassöffnung 11 auf. Die Auslassöffnung führt in diesem Ausführungsbeispiel zu einer Zentrifuge 2, wobei im Uebergangsbereich bevorzugterweise ein steuerbares Auslassventil 20 angeordnet ist. Anstelle einer Zentrifuge sind andere Trennungsvorrichtungen einsetzbar, beispielsweise ein Bandfilter.

In das Reinigungsgefäss 1 mündet mindestens eine Zufuhrleitung 30,31 für eine Reinigungssole. Jede Zufuhrleitung 30,31 ist bevorzugterweise mit einem Reinigungssole-Vorlagegefäss 3,3' verbunden. Die Reinigungssole wird auf bekannte Art und Weise in das Reinigungsgefäss 1 eingebracht, wobei eine möglichst gleichmässige Verteilung der Reinigungssole über den gesamten Querschnitt des Reinigungsgefässes 1 erzielt werden soll. Beispielsweise sind nach unten gerichtete Düsen vorhanden oder im Querschnitt des Reinigungsgefässe 1 sind horizontal verlaufende Rohre angeordnet, deren Mantel mit mehreren Austrittsöffnungen versehen sind.

In der in Figur 1 dargestellten Ausführungsform weist das Reinigungsgefäss 1 einen unteren, einen mittleren und einen oberen Bereich 12, 13 und 14 auf. In diesem Beispiel entspricht der mittlere Bereich 13 dem Hydroklassifikationsraum, wo eine Hydro-Klassifikation stattfindet, und der untere Bereich 12 dem Kristallisationsraum, in der die Hydro-Extraktion und die Verdrängungskristallisation stattfindet. Der zu reinigende, aus einzelnen Partikeln bestehende Feststoff füllt im Betriebszustand beide Bereiche in Form eines Festbettes auf, welches in der Figur 1 gepunktet dargestellt ist. Oberhalb des Festbettes F befindet sich im Betriebszustand die Sole S, welche bereits durch den Kristallisationsraum und/oder den Hydroklassifikationsraum geströmt ist und nun über den Soleüberlauf 15 abgelassen wird.

Bevorzugterweise sind Zufuhrleitungen 30,31 für eine Reinigungssole sowohl im unteren wie auch im mittleren Bereich 12, 13 vorhanden. Dabei können in die zwei Bereiche unterschiedliche Reinigungssolen mit unterschiedlichem Reinheitsgrad eingeleitet werden. Beste Resultate bei der Reinigung von Feststoffen werden erzielt, wenn die Zufuhrleitungen 30,31 an wohldefinierten Stellen in das Reinigungsgefäss 1 münden. Für die Zufuhrleitung 31 in den Hydroklassifikationsraum 13 gilt, dass sie die Reinigungssole auf derjenigen Höhe des Reinigungsgefässes zuführen soll, wo die Vektorsumme der Feststoffgeschwindigkeit und der Solegeschwindigkeit aufgrund der Zufuhrmenge der Reinigungssole grösser wird als die Fluidisationsgeschwindigkeit. Die Zufuhrleitung 30 hingegen leitet die Reinigungssole auf derjenigen Höhe in den Kristallisationsraum 12, wo die Vektorsumme der Feststoffgeschwindigkeit und der Solegeschwindigkeit kleiner ist als die Fluidisationsgeschwindikgeit.

Der obere Bereich 14 des Reinigungsbehälters ist kegel- oder zylinderförmig gestaltet, wobei in Figur 1 die zylinderförmige Variante dargestellt ist. Er geht in den mittleren Bereich 13 über, welcher wie der untere Bereich kegelförmig gestaltet ist, wobei der mittlere und der untere Bereich 12,13 bevcrzugterweise einen gemeinsamen Kegel mit gleichbleibender Steigung bilden. Das untere Ende des Kegels wird durch die Auslassöffnung 11 gebildet. Der Durchmesser der Auslassöffnung 11 beträgt bevorzugterweise mindestens das 20-fache der mittleren Korngrösse des zu reinigenden Feststoffes. Mindestens einer der kegelförmigen Bereiche, bevorzugterweise mindestens der untere Bereich 12, weist an den Innenwandungen glatte, nicht korrodierende Oberflächen auf. Bevorzugterweise sind sie aus poliertem, rostfreiem Stahl gefertigt oder kunststoffbeschichtet. Der Konusöffnungswinkel a des unteren Bereiches 12 beträgt 10° bis 30°. Bei einer mittleren Fluidisationsgeschwindigkeit von (0.01 bis 1) 10⁻² m/s beträgt er je nach Art der Feststoffe bevorzugterweise annähernd 15° - 20° oder 15 - 25°. Die Höhe des unteren Bereiches 12 muss genügend gross sein, damit das zu reinigende Salz genügend lange in diesem Bereich verbleiben kann, um wirksam gereinigt zu werden.

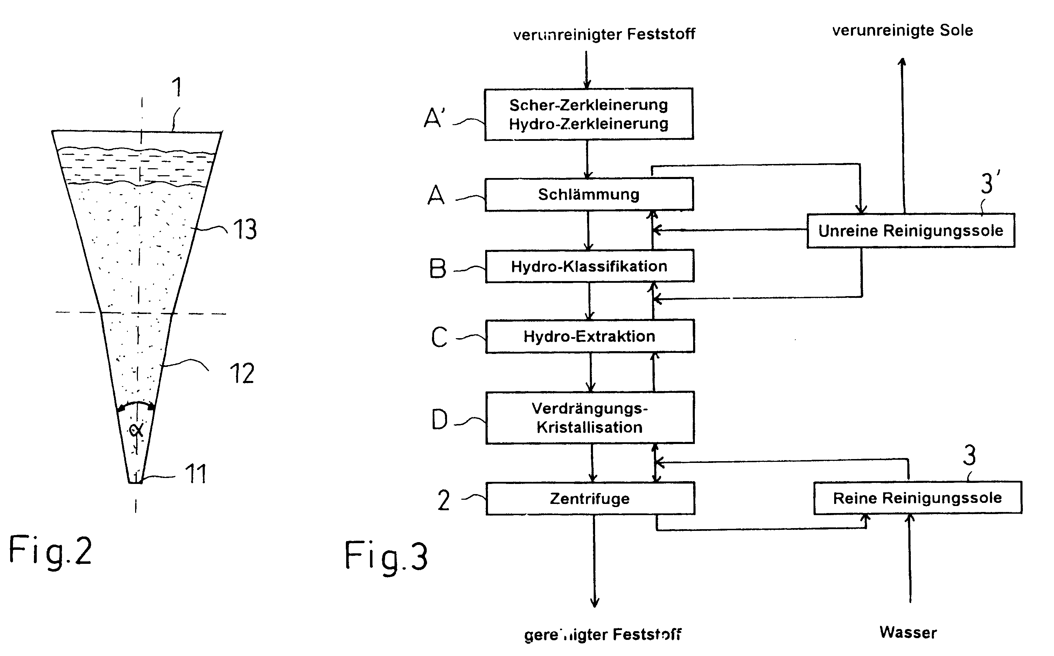

Die in der Figur 2 dargestellte Ausführungsform weist einen Reinigungsbehälter 1 auf, der im wesentlichen kegelförmig ist, wobei er sich wiederum bis zu der wie in dem in Figur 1 dargestellten Beispiel dimensionierten Auslassöffnung 11 verjüngt. Auch hier beträgt der Konusöffnungswinkel a 10° bis 30°, bevorzugterweise annähernd 15° - 25°. Der untere Bereich 12, welcher im wesentlichen den Kristallisationsraum bildet, weist jedoch einen kleineren Winkel auf als der obere Bereich 13, welcher im wesentlichen den Hydroklassifikationsraum umfasst.

Es sind weitere, hier nicht dargestellte Formen des Reinigungsbehälters möglich, wobei darauf zu achten ist, dass alle von der Vertikalrichtung abweichenden Wandungen des mit einem Feststoffbett zu füllenden Reinigungsgefässes bevorzugterweise stets einen Winkel im Bereich von 10° bis 30° aufweisen, damit lediglich ein gleichmässiger Fluss stattfinden kann und Klumpen- und Kanalbildungen verhindert werden.

Anhand der Figuren 1 und 3 ist die Funktionsweise der vorliegenden Reinigungsanlage ersichtlich. Verunreinigter Feststoff, hier Salz, wird über die Einfüllöffnung 10 in das Reinigungsgefäss 1 gefüllt, wobei es schwerkraftbedingt nach unten zur Auslassöffnung 11 hin absinkt. Ueber die mindestens eine Zufuhrleitung 30,31 wird eine Reinigungssole, hier mindestens annähernd gesättigte Salzsole, so in das Reinigungsgefäss 1 geleitet, dass die Salzsole in entgegengesetzter Richtung zur Strömungsrichtung des verunreinigten Salzes, also von unten nach oben, strömt. Bevorzugterweise wird die Reinigungssole über die Zufuhrleitungen und über gleichmässig verteilte, nach unten gerichtete und sich zur Auslassöffnung kegelförmig erweiternde Düsen 33 in den Reinigungsbehälter 1 gepumpt.

Die Reinigungssole umspült das zu reinigende Salz, wobei je nach Art der verunreinigenden Fremdpartikel verschiedene Reinigungsprozesse ablaufen:
- durch Schlämmung (A) mit unreiner gesättigter Sole werden unlösliche Verunreinigungen von den Salzkristallen abgetrennt und mit nach oben geführt.
- durch die Hydro-Klassifikation (B) werden Kalzium-Sulphat und unlösliche Fremdstoffe gemeinsam mit der Reinigungssole nach oben in Richtung Einfüllöffnung 10 befördert;
- durch Hydro-Extraktion (C) werden lösliche Verunreinigungen in der reinen, gesättigten Reinigungssole gelöst und mit dieser weiterbefördert;
- durch Verdrängungskristallisation (D) aufgrund der Hydro-Extraktion mit gesättigter Reinigungssole werden zerteilte oder gelöste Salzkristalle zurückgewonnen.

Zusätzlich zu diesen Reinigungsverfahren kann als erster Schritt eine Scher- und/oder Hydro-Zerkleinerung (A') durchgeführt werden. Dadurch brechen die Salzkristalle mit eingeschlossenen Fremdstoffen an den Bindungsstellen mit den Fremdstoffen auf.

Grundsätzlich werden somit die Verunreinigungen gemeinsam mit der Reinigungssole nach oben befördert, so dass sich über dem Salzvorrat eine Schicht aus verunreinigter Reinigungssole bildet, welche mittels des Ueberlaufes 15 weggeführt wird. Das gereinigte Salz strömt hingegen nach unten zur Auslassöffnung 11. Der mit dem gereinigten Salz mitgeförderte Anteil an Reinigungssole wird in der Zentrifuge 2 vom Salz getrennt. Diese zentrifugierte Reinigungssole wird in einer bevorzugten Ausführungsform wiederum über Zufuhrleitungen 30 in das Reinigungsgefäss 1 zurückgeleitet.

Dank der erfindungsgemässen Vorrichtung wird der Reinheitsgrad des gewaschenen Salzes erhöht, wie folgende Beispiele belegen:

### Beispiel 1:

Rohsalz wurde in der erfindungsgemässen Anlage gemäss dem Salex® -Verfahren gereinigt, wobei das Rohsalz sich wie folgt zusammensetzte:

| | |
|---|---|
| Kalzium Ca | 0.350 G% |
| Magnesium Mg | 0.050 G% |
| Sulfat SO₄ | 3.600 G% |
| Natriumchlorid NaCl | 94.273 G% |

Bei der Reinigung durchlief das zu reinigende Salz zwei Reinigungsstufen. Jede Stufe wurde in einer von zwei in Serie geschalteten Reinigungsvorrichtungen durchgeführt, so dass die oben beschriebenen Reinigungsprozesse zweimal durchlaufen worden sind. Zwischen der ersten und der zweiten Reinigungsstufe wurde das Salz in einer Hydromühle zerkleinert. Dabei wurde als Reinigungssole für die erste Reinigungsvorrichtung die verunreinigte Sole der zweiten, nachgeschalteten Vorrichtung verwendet. Das gereinigte Salz setzte sich wie folgt zusammen:

| | |
|---|---|
| Kalzium Ca | 0.023 G% |
| Magnesium Mg | 0.007 G% |
| Sulfat SO₄ | 0.050 G% |
| Natriumchlorid NaCl | 99.777 G%. |

### Beispiel 2:

Rohsalz wurde in der erfindungsgemässen Anlage gemäss dem Salex® -Verfahren wie in Beispiel 1 gereinigt. Das Rohsalz wies folgende Verunreinigungen auf:

| | |
|---|---|
| Kalzium Ca | 0.100 G% |
| Magnesium Mg | 0.157 G% |
| Sulfat SO₄ | 0.110 G% |

Das gereinigte Salz wies noch folgende Verunreinigungen auf:

| | |
|---|---|
| Kalzium Ca | 0.020 G% |
| Magnesium Mg | 0.016 G% |
| Sulfat SO₄ | 0.020 G% |

Zudem wurde Rohsalz mit denselben Verunreinigungen in einer Labor-Reinigungsvorrichtung mit einer Hydromühle nach einem Standard-Testverfahren, welches die in dem SALEX® -Verfahren angewandten Reinigungsstufen befolgt, mit reinster Sole gereinigt. Dieses Testverfahren wird in der Praxis verwendet, um festzustellen, welcher Antel der Verunreinigungen in einem Idealfall aus dem Salz überhaupt entfernt werden kann. Das nach dem Standard-Testverfahren gereinigte Salz wies noch folgende Verunreinigungen auf:

| | |
|---|---|
| Kalzium Ca | 0.020 G% |
| Magnesium Mg | 0.017 G% |
| Sulfat SO₄ | 0.020 G%. |

Der Wirkungsgrad des Reinigungsverfahrens ist in der Praxis definiert als Verhältnis zwischen dem Anteil in Gewichtsprozent einer Verunreinigung, welche in der Reinigungsvorrichtung entfernt worden ist und demjenigen Anteil, welcher im Standard-Testverfahren entfernt worden ist. Für dieses Beispiel beträgt der Wirkungsgrad bei allen drei gemessenen Verunreinigungen annähernd 100%:
für Ca (0.100% - 0.020%) : (0.100% - 0.020%) x 100 %= 100%
für Mg (0.157% - 0.016%) : (0.157% - 0.017%) x 100 %= 100.7
für SO₄ (0.110% - 0.020%) : (0.110% - 0.020%) x 100 %= 100%

### Beispiel 3:

Rohsalz mit folgenden Verunreinigungen wurde in der erfindungsgemässen Anlage gemäss dem Salex® -Verfahren nach Beispiel 1 gereinigt:

| | |
|---|---|
| Kalzium Ca | 0.086 G% |
| Magnesium Mg | 0.138 G% |
| Sulfat SO₄ | 0.100 G% |

Das gereinigte Salz wies noch folgende Verunreinigungen auf:

| | |
|---|---|
| Kalzium Ca | 0.019 G% |
| Magnesium Mg | 0.016 G% |
| Sulfat SO₄ | 0.020 G% |

Analog zum Beispiel 2 wurde parallel dazu ein Standard-Testverfahren durchgeführt. Das gemäss diesem Verfahren gereinigte Salz wies noch folgende Verunreinigungen auf:

| | |
|---|---|
| Kalzium Ca | 0.019 G% |
| Magnesium Mg | 0.015 G% |
| Sulfat SO₄ | 0.020 G%. |

Auch hier wurde ein Wirkungsgrad von annähernd 100% erreicht.

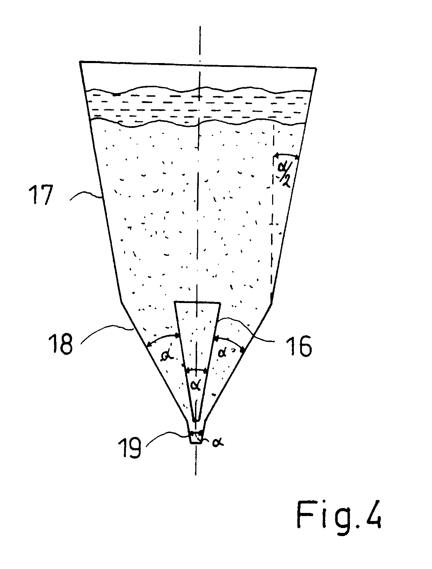

In Figur 4 ist ein drittes Ausführungsbeispiel des erfindungsgemässen Reinigungsgefässes dargestellt. Das Reinigungsgefäss besteht wiederum aus mindestens, hier genau zwei Abschnitten mit unterschiedlichen Konusöffnungswinkeln α. Der obere Abschnitt 17 weist einen Winkel a von 10° bis 30°, bevorzugterweise 15° - 25°, auf. Der untere Abschnitt 18, welcher eine geringere Höhe aufweist, umschliesst jedoch einen grösseren Winkel von 30° bis 90°, vorzugsweise 45° - 75°. Die Zufuhrleitung 30 für die in den Kristallisationsraum eingeführte Reinigungssole befindet sich bevorzugterweise beim Uebergang des unteren Abschnittes 18 in den oberen Abschnitt 17. Das heisst, die Anlage wird so konzipiert, dass in diesem Uebergang die Vektorsumme der Feststoffgeschwindigkeit und der Solegeschwindigkeit gleich oder kleiner ist als die Fluidisationsgeschwindigkeit.

Im Innern dieses unteren Abschnittes 18 ist ein weiterer Einlagekegel 16 mittig angeordnet, welcher den erfindungsgemässen Winkel von 10° bis 30°, vorzugsweise 15° - 25° aufweist. Die Winkel sind vorzugsweise so gewählt, dass wenn der Einlagekegel den Winkel a aufweist, der untere Abschnitt 18 einen Oeffnungswinkel von 3a umschliesst. Die Höhe des Einlagekegels ist je nach Anlage unterschiedlich. In einer Ausführungsform fluchtet der obere Rand des Einlagekegels 16 mit dem Uebergang vom oberen zum unteren Bereich oder er ragt in den oberen Bereich 17 hinein. In einer anderen Ausführungsform endet der obere Rand unterhalb dieses Ueberganges. Sein unteres Ende fluchtet vorzugsweise mit dem unteren Ende des unteren Abschnittes 18, welcher in einen Auslasskegel 19 übergeht, wobei dieser Auslasskegel 19 wiederum vorzugsweise einen Oeffnungswinkel von 10° bis 30°, vorzugsweise 15° - 25° aufweist.

Diese Ausführungsform weist den Vorteil auf, dass sich die Gesamthöhe des Reinigungsgefässes 1 unter Beibehaltung des notwendigen erfindungsgemässen Oeffnungswinkels verkleinern lässt.

## Patentansprüche

1. Vorrichtung zur Reinigung von aus Partikeln bestehenden Feststoffen, insbesondere von kristallinen Feststoffen, mit einem vertikal stehenden Reinigungsgefäss (1), welches oben eine Einfüllöffnung (10) für die zu reinigenden Feststoffe, unten eine Auslassöffnung (11) für die gereinigten Feststoffe und mindestens einen kegelförmigen Bereich (12,13) aufweist, wobei mindestens eine Zufuhrleitung (30,31) in das Reinigungsgefäss (1) vorhanden ist zur Zuführung mindestens einer Reinigungssole in Gegenstromrichtung zur Strömungsrichtung der zu reinigenden Feststoffe,
dadurch gekennzeichnet, dass
der mindestens eine kegelförmige Bereich des Reinigungsgefässes (1) einen Konusöffnungswinkel α von 10° bis 30° aufweist.

2. Vorrichtung zur Reinigung von aus Partikeln bestehenden Feststoffen, insbesondere von kristallinen Feststoffen, mit einem vertikal stehenden Reinigungsgefäss (1), welches oben eine Einfüllöffnung (10) für die zu reinigenden Feststoffe, unten eine Auslassöffnung (11) für die gereinigten Feststoffe und mindestens einen oberen und einen unteren kegelförmigen Bereich (17,18) aufweist, wobei mindestens eine Zufuhrleitung (30, 31) in das Reinigungsgefäss (1) vorhanden ist zur Zuführung mindestens einer Reinigungssole in Gegenstromrichtung zur Strömungsrichtung der zu reinigenden Feststoffe,
dadurch gekennzeichnet, dass
der obere kegelförmige Abschnitt (17) einen Konusoffnungswinkel von 10° bis 30° und der untere Abschnitt (18) einen grösseren Konusöffnungswinkel aufweist, und dass im unteren Abschnitt (18) ein Einlagekegel (16) angeordnet ist, welcher einen Konusöffnungswinkel von 10° bis 30° aufweist.

3. Vorrichtung nach einem der Ansprüche 1 oder 2, dadurch gekennzeichnet, dass der Konusöffnungswinkel α 15° bis 25° beträgt.

4. Vorrichtung nach einem der Ansprüche 1 oder 2, dadurch gekennzeichnet, dass das Reinigungsgefäss (1) im wesentlichen kegelförmig ist.

5. Vorrichtung nach einem der Ansprüche 1 oder 2, dadurch gekennzeichnet, dass das Reinigungsgefäss (1) mindestens zwei kegelförmige Bereiche (12, 13) aufweist, welche unterschiedliche Oeffnungswinkel besitzen.

6. Vorrichtung nach einem der Ansprüche 1 oder 5, dadurch gekennzeichnet, dass zwei kegelförmige Bereiche (12,13) vorhanden sind, welche mit voneinander getrennten Zufuhrleitungen (30,31) für Reinigungssolen verbunden sind, wobei eine obere Zufuhrleitung (31) an einer Stelle in das Reinigungsgefäss (1) mündet, wo die Vektorsumme der Feststoffgeschwindigkeit und der Solegeschwindigkeit grösser ist als die Fluidisationsgeschwindikgeit und die untere Zufuhrleitung (30) dort mündet, wo die Vektorsumme der Feststoffgeschwindigkeit und der Solegeschwindigkeit kleiner ist als die Fluidisationsgeschwindikgeit.

7. Vorrichtung nach einem der Ansprüche 1 oder 5, dadurch gekennzeicnnet, dass mindestens einer der kegelförmigen Bereiche 12, 13) glatte Innenwandungen aufweist.

8. Vorrichtung nach Anspruch 7, dadurch gekennzeichnet, dass die Innenwandungen kunststoffvergutet sind.

9. Vorrichtung nach Anspruch 7, dadurch gekennzeichnet, dass die Innenwandungen aus poliertem rostfreiem Stahl gefertigt sind.

10. Vorrichtung nach einem der Ansprüche 1 oder 2, dadurch gekennzeichnet, dass sie mindestens eine Düse (33) zur Zuführung der mindestens einen Reinigungssole aufweist, welche nach unten gerichtet ist.

11. Vorrichtung nach Anspruch 10, dadurch gekennzeichnet, dass sich die mindestens eine Düse (33) kegelförmig nach unten erweitert.

## Claims

1. Apparatus for the purification of particulate solids, particularly crystalline solids, with a vertically standing purification vessel (1), which is provided at the top with a filling opening (10) for the solids to be purified, at the bottom with a discharge opening (11) for the purified solids and at least one conical area (12, 13), there being at least one feed line (30, 31) to the purification vessel (1) for the supply of at least one purification brine in the countercurrent direction to the flow direction of the solids to be purified,
characterized in that
at least one conical area of the purification vessel (1) has a cone aperture angle α of 10 to 30°.

2. Apparatus for the purification of particulate solids, particularly crystalline solids, with a vertically standing purification vessel (1), which is provided at the top with a filling opening (10) for the solids to be purified, at the bottom with a discharge opening (11) for the purified solids and at least an upper and a lower conical area (17, 18), there being at least one feed line (30, 31) to the purification vessel (1) for the supply of at least one purification brine in the countercurrent direction to the flow direction of the solids to be purified,
characterized in that
the conical section (17) has a cone aperture angle of 10° to 30° and the lower section (18) a larger cone aperture angle, and that in the lower section (18) there is arranged an insert cone (16) which has a cone aperture angle of 10° to 30°.

3. Apparatus according to one of claims 1 or 2, characterized in that the cone aperture angle α is 15 to 25°.

4. Apparatus according to one of claims 1 or 2, characterized in that the purification vessel (1) is substantially conical.

5. Apparatus according to one of claims 1 or 2, characterized in that the purification vessel (1) has at least two conical areas (12, 13) which have different aperture angles.

6. Apparatus according to one of claims 1 or 5, characterised in that two conical areas (12, 13) are present which are connected to feed lines (30, 31) for purification brines, which are separated from one another, wherein an upper feed line (31) opens into the purification vessel (1) at a location where the vector sum of the solid speed and of the brine speed is larger than the fluidization speed, and the lower feed line (30) opens where the vector sum of the solid speed and of the brine speed is smaller than the fluidization speed.

7. Apparatus according to one of the claims 1 or 5, characterized in that at least one of the conical areas (12, 13) has smooth inner walls.

8. Apparatus according to claim 7, characterized in that the inner walls are plastic-coated.

9. Apparatus according to claim 7, characterized in that the inner walls are made from polished stainless steel.

10. Apparatus according to one of claims 1 or 2, characterized in that it has at least one nozzle (33) for the supply of at least one purification brine, which is directed downwards.

11. Apparatus according to claim 10, characterized in that the at least one nozzle (33) widens conically downwards.

## Revendications

1. Installation pour la purification de solides consistant en des particules, en particulier de solides cristallisés, comportant un récipient de purification (1) disposé verticalement, qui présente en haut une ouverture de chargement (10) pour les solides à purifier, en bas une ouverture d'évacuation (11) pour les solides purifiés et au moins une zone de forme conique (12,13), tandis qu'au moins une conduite d'alimentation (30,31) est présente dans le récipient de purification (1) pour l'introduction d'au moins une saumure de purification à contre-courant par rapport à la direction d'écoulement des solides à purifier,
caractérisée en ce que
la ou les zones de forme conique du récipient de purification (1) présentent un angle a d'ouverture du cône de 10° à 30°.

2. Installation pour la purification de solides consistant en des particules, en particulier de solides cristallisés, comportant un récipient de purification (1) disposé verticalement, qui présente en haut une ouverture de chargement (10) pour les solides à purifier, en bas une ouverture d'évacuation (11) pour les solides purifiés et au moins une zone supérieure et une zone inférieure de forme conique (17,18), tandis qu'au moins une conduite d'alimentation (30,31) est présente dans le récipient de purification (1) pour l'introduction d'au moins une saumure de purification à contre-courant par rapport à la direction d'écoulement des solides à purifier,
caractérisée en ce que
la section supérieure de forme conique (17) présente un angle d'ouverture du cône de 10° à 30° et la section inférieure (18) présente un angle d'ouverture du cône plus grand, et en ce que dans la section inférieure (18) est disposé un cône rapporté (16) qui présente un angle d'ouverture du cône de 10° à 30°.

3. Installation selon l'une des revendications 1 ou 2, caractérisée en ce que l'angle a d'ouverture du cône vaut 15° à 25°.

4. Installation selon l'une des revendications 1 ou 2, caractérisée en ce que le récipient de purification (1) est essentiellement en forme de cône.

5. Installation selon l'une des revendications 1 ou 2, caractérisée en ce que le récipient de purification (1) présente au moins deux zones en forme de cône (12,13) qui présentent des angles d'ouverture différents.

6. Installation selon l'une des revendications 1 ou 5, caractérisée en ce que deux zones de forme conique (12,13) sont présentes, celles-ci étant reliées à des conduites d'alimentation séparées l'une de l'autre (30,31) pour saumures de purification, tandis qu'une conduite d'alimentation supérieure (31) débouche en un endroit dans le récipient de purification (1), où la somme vectorielle de la vitesse des solides et de la vitesse de la saumure est supérieure à la vitesse de fluidisation et la conduite d'alimentation inférieure (30) débouche là où la somme vectorielle de la vitesse des solides et de la vitesse de la saumure est inférieure à la vitesse de fluidisation.

7. Installation selon l'une des revendications 1 ou 5, caractérisée en ce qu'au moins l'une des zones de forme conique (12,13) présente des parois intérieures lisses.

8. Installation selon la revendication 7, caractérisée en ce que les parois intérieures sont améliorées avec des matières plastiques.

9. Installation selon la revendication 7, caractérisée en ce que les parois intérieures sont réalisées en acier inoxydable poli.

10. Installation selon l'une des revendications 1 ou 2, caractérisée en ce qu'elle présente au moins un ajutage (33) pour l'introduction de la ou des saumures de purification, qui est orienté vers le bas.

11. Installation selon la revendication 10, caractérisée en ce qu'au moins un ajutage (33) s'élargit en forme de cône vers le bas.
